# EUROPEAN PATENT SPECIFICATION

(11) **EP 2 329 709 B1**
(45) Date of publication and mention of the grant of the patent: **25.09.2013**
(21) Application number: 09178237.5
(22) Date of filing: 07.12.2009
(51) Int. Cl.: A01K 1/01

(54) **Self scooping cat litter box**
Selbstreinigendes Katzenklo
Boîte de litière pour chat à ramassage automatique

(43) Date of publication of application: 08.06.2011
(73) Proprietor: Ourpet's Company, Fairport Harbor, OH 44077 (US)
(72) Inventor: Nottingham, John R., Bratenahl, OH 44108 (US); Spirk, John W., Gates Mills, OH 44040 (US); Kalman, Jeffrey M., Cleveland Heights, OH 44118 (US); O'Toole, Michael P., Parma, OH 44129 (US); Stephan, Gary Robert, Seven Hills, OH 44131 (US); Soreo, Robert F., Cleveland Heights, OH 44118 (US); Tsengas, Steven, Fairport Harbor, OH 44077 (US)
(74) Representative: Desrois, Julie

(56) References cited:
- US-B1- 6 202 595

## Description

### BACKGROUND OF THE INVENTION

### 1. Field of the Invention

The present invention relates generally to an automated cat litter box and, more particularly, to a conventional covered litter box pan having all of its self-scooping components comprised at one end on a cleaning carriage assembly that retrieves clumped litter.

### 2. Description of the Related Art

It is important to routinely clean litter boxes so that cat's don't track clumped waste throughout the home and malicious odors caused by waste don't spread. The number and the variety of automated litter box designs on the market suggest that cleaning the box is a dreaded chore to even the most avid cat enthusiast. These litter boxes typically comprise a means for separating the waste clumps from the litter granules so that little maintenance is required to keep the box clean. A search of the prior art did not disclose any patents that read directly on the claims of the instant invention; however, the following references were considered related.

Of considerable relevance is the animal waste disposal system disclosed in U.S. Patent No. 6,202,595 to Atrcravi, which comprises a drive mechanism that collects waste in a scoop and moves it to a container attached to a removable drawer having two handles so that it can be easily discarded. The device taught in U.S. Patent No. 6,205,954 to Bogaerts comprises a comb mounted to a movable carriage that pushes waste to a receiving container having a cover lid. The waste container can also be taken off for emptying.

The self-cleaning litter box taught in U.S. Application No. 2003/0217700 to Northrop et al. comprises rake tines that push clumps upward along an inclined ramp to a waste box having an open lid to receive the clumps. The waste box is fitted with a removable tray and a disposable liner so that the container can be emptied easily.

The disposal system taught in U.S. Patent No. 5,226,388 to McDaniel comprises a rigid scoop extending across the width of the pan that travels along a set of parallel tracks extending along the sidewalls to move clumped waste to a receptacle in the form of a trash bag.

The improved automated self-cleaning litter box disclosed in U.S. Patents 6,082,302 to Thaler et al. and 5,477,812 to Waters both comprise an open disposal receptacle at the discharge end of the litter chamber. The self-cleaning cat box taught in U.S. Patent No. 5,544,620 comprises a storage compartment having a scraper that prevents the waste from leaving the area.

The litter box and pivotal sifting device taught in U.S. Patent No. 5,823,137 to Rood et al. comprises a sifting device disposed beneath a layer of litter that pivotally moves up through the litter to deliver the waste to a disposal site.

The litter boxes disclosed in U.S. Patent Nos. 6,494,165 to Asbury and 5,272,999 to Nussle both comprise a sifting screen that divides the litter box into different compartments. The boxes must be tilted for the clumps to be separated from the litter and stored in one of the compartments.

The self cleaning pet litter boxes disclosed in U.S. Patent Nos. 6,568,348 to Bédard, 6,401,661 to Emery, 5,931,119 to Nissim et al, 5,662,066 to Reitz and 5,107,797 all comprise a litter container, a raking mechanism and a motor. A distinguishing feature to these inventions is that the motors rotate the litter containers so that the rake can separate the clumps.

While some of the features may be incorporated into this invention in combination, other elements are different enough as to make the combination distinguished over the prior art. More specifically, the present invention eliminates the bulky and the inconvenient designs common to many automated litter boxes. The raking, the motor and the receptacle components disclosed in the prior art are all positioned in various locations of the box; they limit the litter space available to the cat. In the present invention, the waste is scooped and retrieved to a waste container. The waste container, the rotatable grate and the motor mechanism are all contained on a carriage positioned within and on one end of a conventional rectangular litter pan. The waste container is later removed by users. These features make this litter a convenient and a cost efficient one for consumers.

Consequently, a need has been long felt for providing an improved automated litter box and a system for cleaning the same that requires little to no maintenance, but at the same time, one having a carriage assembly that is neither complex, space consuming nor expensive.

### SUMMARY OF THE INVENTION

It is an object of the present invention as defined in claim 1 to provide an improved automated cat litter box and, more specifically, a litter box having all of its self-cleaning components comprised on a cleaning carriage at its one end.

It is a feature of the present invention to position a carriage assembly comprising a rotatable grate, a driving mechanism and a waste container at one of the litter pan's distal ends.

One advantage to the present invention is that most of the pan's litter containing space is preserved for the cat while the automated cleaning components rest at the opposite end from where the cat ingresses the box.

It is another feature of the present invention to include a ramp having horizontal ribs to catch any litter caught on the cat's paw while it egresses the box so that litter is not tracked throughout the house.

It is another feature of the present invention to include a waste container comprising a removable tray that fits into a drawer so that the entire waste receptacle does not need to be removed for waste to be discarded.

It is another feature of the present invention to include a litter box cover that is designed to accommodate the litter box's construction. One advantage to the litter box cover is that it can be easily placed on and removed from the pan. Furthermore, no housing is required to support the scooping mechanism; hence, the scooping mechanism can mount directly to the pan.

### BRIEF DESCRIPTION OF THE DRAWINGS

The advantages and features of the present invention will become better understood with reference to the following more detailed description and claims taken in conjunction with the accompanying drawings, in which like elements are identified with like symbols, and in which:
FIG. 1 is an elevational view of a self-scooping cat litter box according to a preferred embodiment of the present invention;
FIG. 2 is an elevational exploded view of the self-scooping cat litter box shown in FIG. 1;
FIG. 3. is the self-scooping litter box of FIG. 1, wherein a lid to a waste drawer is opened to expose its interior;

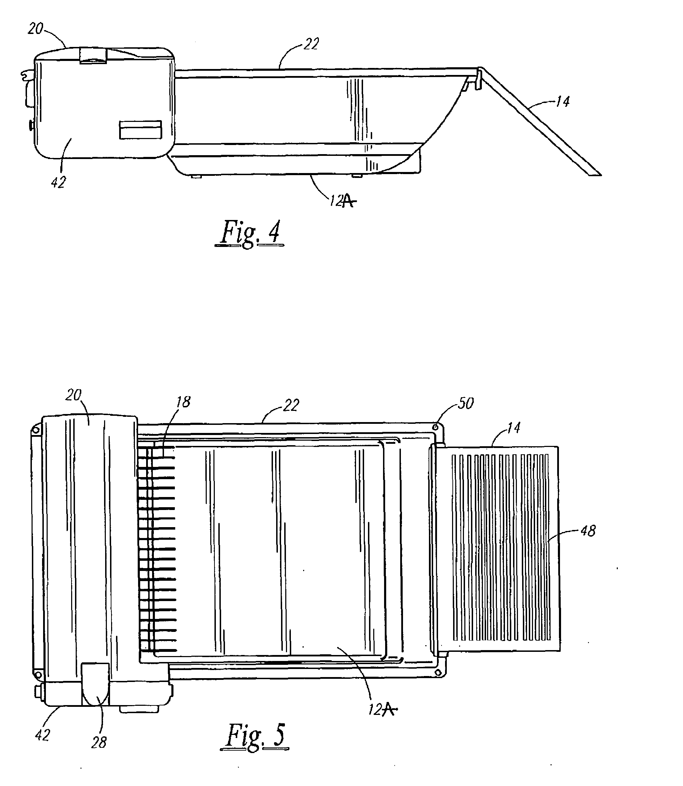

FIG. 4 is a side view of the self-scooping cat litter box; and,
FIG. 5 is a top view of the automated cat litter box.

### DESCRIPTION OF THE PREFERRED EMBODIMENTS

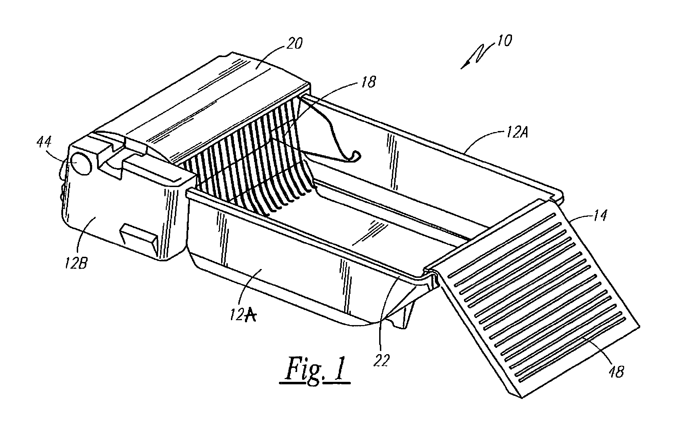

The best mode for carrying out the invention is presented in terms of its preferred embodiment, herein depicted within the Figures. The automated cat litter box 10 according to the preferred embodiment of the present invention is shown in FIGS. 1-3. To achieve the objectives of the present invention, the preferred embodiment comprises a deep rectangular litter pan 12a having a ramp 14 along its width at one end and a self-cleaning carriage 12b resting at the opposite end. The self-cleaning carriage 12b preferably comprises a waste drawer 16 having a rotating grate 18 vertically attached thereto. The length of the waste drawer 16 travels along the width of the litter pan 12a; its depth approximates half the depth of the litter pan 12a. A lid 20 is hingedly attached to the waste drawer 16 along its length.

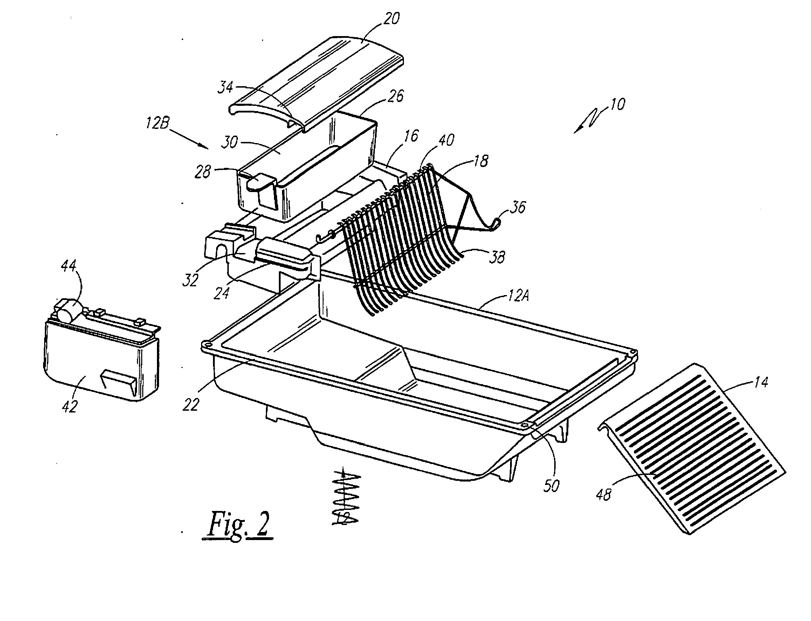

FIG. 2 shows a tray 26 that is sized to fall into and fit into the waste drawer 16. A disposable and non-reusable plastic covering 30, or lining, is placed over the tray 26 so that waste can be speedily and easily removed. A handle 28 is positioned at the tray's 26 end so that the tray can be lifted out of the drawer 16 and the waste discarded. The handle 28 extends outwards through a window formed by a rectangular indentation 32 on the top edge of the drawer 16 and a curved indentation 34 on the edge of the lid 20 when the lid 20 is in a closed position.

The self-cleaning carriage 12b rests on the lip 22 of the pan 12a by means of an engagement rail 24. When the litter is self-cleaning, the self-cleaning carriage 12b travels along the lip 22 and also travels a guiding rim 36 extending outwards from the interior sidewall of the pan 12a. While the engagement rail 24 is carrying the entire self-cleaning carriage 12b along the length of the pan 12a, litter passes through the tines 38 of the rotating grate 18 while clumps of waste are pushed forward. The tines 38 can be straight or curved so as to better shovel the waste in the cleaning process. Towards the end of the guiding rim 36, the grate 18 rotates from its vertical position and climbs the curved shallow end of the pan 12a to a horizontal position. The grate 18 then flips backwards by means of a pivot rod 40 to shovel all of the clumped waste that the tines 38 sifted out of the litter into the tray 26 behind it. The grate 18 mechanically returns to the vertical position and the cleaning carriage 12b returns backwards along the same guiding rim 36 to its resting position.

The self-cleaning carriage 12b travels the length of the pan 12a by means of a motorized driving mechanism (not shown) housed in a cabin 42 attached to and adjacent to the drawer 16. It is envisioned that the cabin 42 is positioned outside of the litter box 10 so as to not consume any additional litter containing space in the litter pan 12a. A push lock release 44 positioned on the top of the cabin 42 provides access to the motor and the mechanical elements used to drive the cleaning carriage 12b.

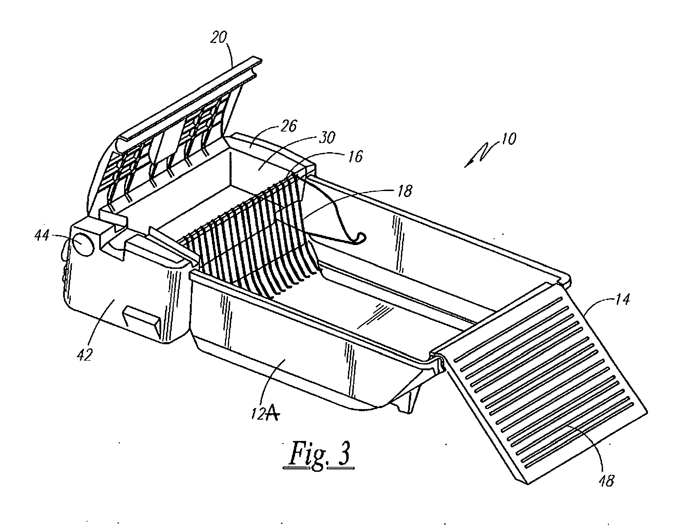

In an alternate embodiment to the present invention, shown in FIG. 3, a hand crank can be used to drive the self-cleaning carriage 12b. In this embodiment, the driving mechanism is still housed in the cabin 42, but it is not motorized.

Another functional element comprised in the preferred embodiment includes horizontal ribs 48 extending across the ramp both to assist the cat in ingress and egress and to assist in catching any litter or clumps caught on the cat's paws before it is tracked throughout the home. Circular grooves 50 positioned on the lip 22 of the pan 12a at its four corners also provide a means for a litter box lid to be placed over the pan 12a.

The preferred embodiment of the present invention operates by means of a single motorized driving mechanism. It is envisioned that the motorized scooping is actuated by a sensor and/or a person. After the cat leaves the litter box, the lid on the waste drawer opens so that clumped waste can access the tray. The engagement rails positioned on the cleaning carriage carries it down the length of the pan by means of a lip and a guiding rim positioned on the interior sidewall of the pan. As the cleaning carriage travels the pan, litter passes through the tines on a rotatable grate while clumped litter is pushed forward. Because the depth of the drawer approximates half the depth of the pan, the litter that passes through the tines is smoothed under the pan. As the rotatable gate approaches the curved shallow end of the pan, the channel discontinues and the grate, pushed to a relatively horizontal position, mechanically shovels all of the clumped waste into the covered tray behind it. The grate returns to a vertical position and the cleaning carriage travels back to its resting position. The lid closes on the drawer so as to cover the malicious odors caused by the waste held within until the pet owner returns to lift the tray, by means of its handle, and discard the waste. The tray can be turned upside to discard the waste or the plastic covering can be removed with the waste held therein and the both discarded.

It is envisioned that a litter box lid covers the automated cat litter box during the automated cleaning process. The lid is suspended above the pan by means of four pins that snap into the corner grooves of the pan. The lid can be easily and speedily removed when the drawer needs to be accessed. In addition, the fabric cover can be removed from the frame and repeatedly washed.

The foregoing descriptions of specific embodiments of the present invention have been presented for purposes of illustration and description. They are not intended to be exhaustive or to limit the invention to the precise forms disclosed, and obviously many modifications and variations are possible in light of the above teaching. The embodiments were chosen and described in order to best explain the principles of the invention and its practical application, to thereby enable others skilled in the art to best utilize the invention and various embodiments with various modifications as are suited to the particular use contemplated. It is intended that the scope of the invention be defined by the Claims appended hereto and their equivalents. Therefore, the scope of the invention is to be limited only by the following claims.

## Claims

1. A self scooping cat litter box (10), comprising:
an uncovered, deep rectangular pan (12a);
a scooping carriage (12b) at said pan's distal end;
a driving mechanism to drive said scooping carriage (12b) along said pan (12a);
a waste drawer (16) driven comprised on said scooping carriage (12b); and,
a pivotally supported grate (18) vertically attached to said waste drawer (16).

2. The self scooping cat litter box (10) of Claim 1, wherein said
waste drawer (16) comprises:
a hingedly attached lid (20);
a tray (26) sized to fit into said waste drawer (16); and
a disposable plastic cover (30) or a lining placed over said tray (26),
wherein said tray (26) can be lifted out of said waste drawer (16) and the waste contents therein discarded by means of an outwardly extended handle (28) positioned on said tray (26).

3. The self scooping cat litter box (10) of Claim 1,wherein said scooping carriage (12b) rests on a lip (22) of said litter pan (12a) by means of an engagement rail (24) positioned at its opposite sides, such that said scooping carriage (12b) can travel along said engagement rail (24), retrieve clumped litter within said pan 12a), and return to store the retrieved clumps.

4. The self scooping cat litter box (10) of Claim 1, wherein said litter pan (12a) further comprises a guiding rim (36) that extends outwards from the interior sidewall of said pan (12a).

5. The self scooping cat litter box (10) of Claim 1, wherein said pan (12a) shallows and curves at the end opposite where said scooping carriage (12b) rests.

6. The self scooping cat litter box (10) of Claim 5 further comprising a ramp (14) having horizontal ridges (48) at said shallow end.

7. The self scooping cat litter box (10) of Claim 1, wherein said driving mechanism is contained in a cabin (42) positioned on the outside of said pan (12a), but attached to and adjacent to said waste drawer (16).

8. A method for automatically scooping a cat litter box (10), said method comprises the steps:
driving a comb (18) affixed to a waste carriage (12b) comprising a waste drawer (16), said comb (18) is driven from a first side of a litter pan (12a) through a litter receptacle to accumulate any clumps to a second, opposite side of said litter pan (12a);
pivoting said comb (18) upward to retrieve said accumulated clumps;
guiding said accumulated clumps into a waste collection receptacle (16); and
returning said comb (18) to said first side for storage of collected waste within a boundary of said litter pan (12a).

## Patentansprüche

1. Selbstreinigendes Katzenklo (10), umfassend:
eine nicht abgedeckte, tiefe rechteckige Schale (12a);
einen Reinigungsschlitten (12b) am distalen Ende der Schale;
einen Antriebsmechanismus zum Antreiben des Reinigungsschlittens (12b) entlang der Schale (12a);
ein Abfallschubfach (16), das an dem Reinigungsschlitten (12b) enthalten angetrieben ist; und
ein drehgelenkig gelagertes Gitter (18), das senkrecht an dem Abfallschubfach (16) befestigt ist.

2. Selbstreinigendes Katzenklo (10) nach Anspruch 1, wobei das Abfallschubfach (16) Folgendes umfasst:
einen klappbar befestigten Deckel (20);
einen Einsatz (26), der so bemessen ist, dass er in das Abfallschubfach (16) passt; und
eine Einmalkunststoffabdeckung (30) oder eine Auskleidung, die über dem Einsatz (26) platziert ist,
wobei der Einsatz (26) aus dem Abfallschubfach (16) gehoben werden und der darin enthaltene Abfall mit einem sich nach außen erstreckenden Griff (28), der an dem Einsatz (26) platziert ist, entsorgt werden kann.

3. Selbstreinigendes Katzenklo (10) nach Anspruch 1, wobei der Reinigungsschlitten (12b) mittels einer Kontaktschiene (24), die an gegenüberliegenden Seiten platziert ist, auf einem Rand (22) der Streuschale (12a) aufliegt, sodass sich der Reinigungsschlitten (12b) entlang der Kontaktschiene (24) bewegen, verklumpte Streu aus der Schale (12a) herausholen und zurückkehren kann, um die herausgeholten Klumpen aufzubewahren.

4. Selbstreinigendes Katzenklo (10) nach Anspruch 1, wobei die Streuschale (12a) ferner einen Führungsrand (36) umfasst, der sich von der inneren Seitenwand der Schale (12a) aus nach außen erstreckt.

5. Selbstreinigendes Katzenklo (10) nach Anspruch 1, wobei die Schale (12a) an dem Ende gegenüber der Stelle, wo der Reinigungsschlitten (12b) aufliegt, flach wird und sich wölbt.

6. Selbstreinigendes Katzenklo (10) nach Anspruch 5, ferner umfassend eine Schräge (14) mit waagerechten Rippen (48) an dem flachen Ende.

7. Selbstreinigendes Katzenklo (10) nach Anspruch 1, wobei der Antriebsmechanismus in einem Gehäuse (42) enthalten ist, das an der Außenseite der Schale (12a) platziert ist, jedoch an dem Abfallschubfach (16) befestigt und daneben angeordnet ist.

8. Verfahren zum automatischen Reinigen eines Katzenklos (10), wobei das Verfahren folgende Schritte umfasst:
Antreiben eines Kamms (18), der an einem Abfallschlitten (12b) befestigt ist, der ein Abfallschubfach (16) umfasst, wobei der Kamm (18) von einer ersten Seite einer Streuschale (12a) aus durch einen Streubehälter zu einer zweiten, gegenüberliegenden Seite der Streuschale (12a) bewegt wird, um alle Klumpen zu sammeln;
Drehen des Kamms (18) nach oben, um die gesammelten Klumpen herauszuholen;
Führen der gesammelten Klumpen in einen Abfallsammelbehälter (16); und
Zurückführen des Kamms (18) zu der ersten Seite zum Aufbewahren des gesammelten Abfalls innerhalb eines Bereichs der Streuschale (12a).

## Revendications

1. Boîte à litière pour chat à ramassage automatique (10), comprenant :
un bac rectangulaire profond, non couvert (12a) ;
un chariot de ramassage (12b) à l'extrémité distale dudit bac ;
un mécanisme d'entraînement pour entraîner ledit chariot de ramassage (12b) le long dudit bac (12a) ;
un tiroir à déchets (16) entraîné, agencé sur ledit chariot de ramassage (12b) ; et
une grille (18) supportée de façon pivotante, attachée verticalement audit tiroir à déchets (16).

2. Boîte à litière pour chat à ramassage automatique (10) selon la revendication 1, dans laquelle ledit tiroir à déchets (16) comprend :
un couvercle (20) attaché de façon articulée ;
un plateau (26) dimensionné pour s'adapter dans ledit tiroir à déchets (16) ; et
un couvercle (30) en matière plastique, jetable, ou un revêtement placé sur ledit plateau (26),
ledit plateau (26) pouvant être soulevé hors dudit tiroir à déchets (16) et le contenu de déchets à l'intérieur de celui-ci, mis au rebut au moyen d'une poignée s'étendant vers l'extérieur (28) positionnée sur ledit plateau (26).

3. Boîte à litière pour chat à ramassage automatique (10) selon la revendication 1, dans laquelle ledit chariot de ramassage (12b) repose sur une lèvre (22) dudit bac à litière (12a) au moyen d'un rail d'engagement (24) positionné sur ses côtés opposés de telle sorte que ledit chariot de ramassage (12b) peut se déplacer le long dudit rail d'engagement (24), récupérer la litière agglomérée à l'intérieur dudit bac (12a) et revenir pour stocker les amas récupérés.

4. Boîte à litière pour chat à ramassage automatique (10) selon la revendication 1, dans laquelle ledit bac à litière (12a) comprend en outre un rebord de guidage (36) qui s'étend vers l'extérieur à partir de la paroi latérale intérieure dudit bac (12a).

5. Boîte à litière pour chat à ramassage automatique (10) selon la revendication 1, dans laquelle ledit bac (12a) devient moins profond et s'incurve à l'extrémité opposée où repose ledit chariot de ramassage (12b).

6. Boîte à litière pour chat à ramassage automatique (10) selon la revendication 5, comprenant en outre une rampe (14) ayant des nervures horizontales (48) à ladite extrémité peu profonde.

7. Boîte à litière pour chat à ramassage automatique (10) selon la revendication 1, dans laquelle ledit mécanisme d'entraînement est contenu dans une cabine (42) positionnée sur l'extérieur dudit bac (12a), mais attachée et adjacente audit tiroir à déchets (16).

8. Procédé pour ramasser automatiquement une boîte à litière pour chat (10), ledit procédé comprenant les étapes suivantes :
entraîner un peigne (18) fixé à un chariot à déchets (12b) comprenant un tiroir à déchets (16), ledit peigne (18) étant entraîné d'un premier côté d'un bac à litière (12a), à travers un réceptacle à litière pour accumuler tous amas, à un second côté opposé dudit bac à litière (12a) ;
faire pivoter ledit peigne (18) vers le haut pour récupérer lesdits amas accumulés ;
guider lesdits amas accumulés dans un réceptacle de collecte de déchets (16) ; et
retourner ledit peigne (18) audit premier côté pour un stockage de déchets collectés à l'intérieur d'une limite dudit bac à litière (12a).
